(19) Europäisches Patentamt
European Patent Office
Office européen des brevets

(11) **EP 4 521 780 A1**

(12) **DEMANDE DE BREVET EUROPEEN**

(43) Date de publication:
**12.03.2025 Bulletin 2025/11**

(21) Numéro de dépôt: **24195532.7**

(22) Date de dépôt: **21.08.2024**

(51) Classification Internationale des Brevets (IPC):
*H04W 4/02* (2018.01)   *H04W 4/029* (2018.01)
*G06F 16/28* (2019.01)   *G06F 17/18* (2006.01)
*G06Q 50/40* (2024.01)   *G06T 11/20* (2006.01)
*G06Q 10/06* (2023.01)

(52) Classification Coopérative des Brevets (CPC):
**H04W 4/029; G06F 16/287; G06F 17/18;
G06Q 50/40; G06T 11/206; G08G 1/00;
H04W 4/027;** G06Q 10/06

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH MA MD TN**

(30) Priorité: **06.09.2023 FR 2309371**

(71) Demandeur: **IFP Energies nouvelles
92500 Rueil-Malmaison (FR)**

(72) Inventeurs:
• **COLLET, David
92852 RUEIL-MALMAISON CEDEX (FR)**
• **HAMMOUMI, Adam
92852 RUEIL-MALMAISON (FR)**
• **DE NUNZIO, Giovanni
92852 RUEIL-MALMAISON CEDEX (FR)**

(74) Mandataire: **IFP Energies nouvelles
Département Propriété Industrielle
Rond Point de l'échangeur de Solaize
BP3
69360 Solaize (FR)**

(54) **PROCEDE DE REGROUPEMENT DE TRAJETS PARCOURUS**

(57) La présente invention concerne un procédé de regroupement de trajets, avec une étape d'acquisition (ACQ) des données de positionnement horodatées des trajets, une étape de filtrage (FIL) des trajets aberrants, puis une étape de regroupement (CST) par une méthode de regroupement agglomératif basé sur une distance spatiotemporelle.

[Fig 1]

ACQ → FIL → CST →

**EP 4 521 780 A1**

**Description**

**Domaine technique**

La présente invention concerne le domaine de regroupement de trajets parcourus, en vue notamment de déterminer le mode de transport, une quantité de polluants émis, une vitesse de véhicule et/ou un débit de véhicule.

Le domaine du transport revêt un aspect essentiel de la vie quotidienne dont l'économie mondiale dépend fortement. Cependant, il joue également un rôle majeur dans la dégradation de la qualité de l'air et dans l'augmentation des émissions de $CO_2$, en particulier dans les zones urbaines. Selon l'Organisation Mondiale de la Santé (OMS), le transport est l'une des principales sources de pollution atmosphérique, et il est directement lié à de multiples maladies respiratoires et cardiovasculaires. En outre, le transport mondial est à l'origine d'environ 24 % des émissions directes de $CO_2$ provenant de la combustion de carburants, dont près des trois quarts correspondent aux voitures, camions, bus et motos, ce qui aggrave encore le phénomène de réchauffement climatique. Parmi les autres types d'émissions nocives figurent les oxydes d'azote (NOx), l'ozone troposphérique ($O_3$) et les particules (PM), qui dépassent généralement les limites recommandées. L'importance du rôle des transports dans la qualité de l'air se reflète également dans le nombre croissant d'actions politiques menées en Europe au cours des dernières années, ce qui en fait un sujet central. Les stratégies visant à s'attaquer à ce problème sont notamment les suivantes : normes en matière d'efficacité des véhicules et des carburants à faible teneur en carbone, développement de véhicules à faibles émissions, politiques fiscales et régimes d'imposition.

Les nouvelles données de mobilité (« Floating Car Data », pouvant être traduit par données de véhicule traceur, données de capteurs de géolocalisation de type GPS des téléphones mobiles, données de bornage téléphonique, etc.) présentent un potentiel toujours peu exploité dans la caractérisation des comportements de mobilité sur un territoire. En effet, le téléphone mobile est devenu l'un des objets incontournables de la vie de tous les jours. Cet appareil est, d'une part, connecté au réseau, mais les technologies plus récentes permettent, d'autre part, d'être connecté et détecté par d'autres appareils, tels que des satellites via un système de géolocalisation tel que le protocole Global Positioning System (GPS - pouvant être traduit par système de positionnement global), des bornes de réseau sans fil via le protocole WIFI ou d'autres téléphones mobiles via le protocole Bluetooth. Ces données de connexion peuvent permettre de déterminer de manière plus ou moins précise la position de l'appareil mobile, donc a priori celle de son propriétaire, et par conséquent peuvent être utiles pour la caractérisation de la mobilité.

Les opérateurs téléphoniques collectent les informations de connexion à leurs antennes mobiles pour tous les usagers lors de transferts de données transitant par le réseau de téléphonie mobile, tels que les appels, les messages et les connexions à internet, que nous appellerons évènements par la suite. Ces données appelées Call Detail Records (CDR - pouvant être traduit par enregistrement des détails d'appel) contiennent pour chaque événement enregistré, l'identifiant de l'utilisateur, les dates de début et de fin de l'évènement et la position de l'antenne par lequel l'information a transité. Ce genre de données offre un taux de pénétration de la population très intéressant, car aujourd'hui la plupart de la population possède un téléphone portable. Cependant, la génération de ces données n'est souvent pas régulière puisqu'elle dépend de l'activité des utilisateurs sur leur téléphone mobile. Il est ainsi constaté qu'une bonne partie de ces données apparait par salves et lors de phases statiques. C'est pour cette raison que ce type de données est beaucoup utilisé pour l'estimation de matrices origine-destination de déplacements, ou pour déterminer les zones d'attraction d'un territoire de manière dynamique. Néanmoins, la mobilité étant répétable, il est possible de trouver des motifs récurrents dans la mobilité des usagers. Certains travaux visent même à compléter des données dans les phases dynamiques en utilisant les motifs observés. Peu de solutions visent à déterminer la trajectoire empruntée par un utilisateur pour aller d'un point d'origine à une destination.

**Technique antérieure**

Concernant l'agrégation de trajectoires en général, il y a de nombreux travaux sur les données GPS qui consistent à trouver en temps réel quels sont les groupes d'individus qui suivent la même trajectoire pour les regrouper, dans un point de vue plus Lagrangien. La plupart des solutions n'utilisent pas simplement des données GPS, mais beaucoup d'autres informations que peuvent leur fournir les téléphones, telles que la vitesse et l'accélération instantanée des individus.

Concernant l'agrégation de trajectoires avec des données de réseau de téléphonie mobile, les données Network Signal Data (NSD - pouvant être traduit par données de signal de réseau), qui sont générées dès qu'un téléphone se connecte à une antenne pour trouver du réseau, sont souvent préférées aux données CDR. Les données CDR étant un sous-ensemble des données NSD, tout ce qui peut être fait avec les données CDR peut être fait avec les données NSD. Une estimation de matrice origine - destination est permise avec des données NSD.

Plusieurs solutions ont été développées dans le but de catégoriser des trajets parcourus à partir de données mesurées au moyen d'un téléphone portable.

La demande de brevet FR 3112398 (US 2022/0011123) concerne un regroupement de trajectoires en clusters (groupements) à partir de données GPS, pour permettre d'associer les trajectoires du même cluster à un même mode de transport. Pour mettre en oeuvre ce regroupement, une distance spatiale est utilisée, ce qui ne permet pas de discriminer les modes de transports qui pourraient utiliser le même chemin, mais à une vitesse différente. De plus, la distance de Fréchet modifiée décrite dans cette demande de brevet n'est pas adaptée pour un traitement d'un grand ensemble de trajets.

La demande de brevet FR 3130488 concerne un procédé de détermination d'un mode de transport au moyen d'un réseau de téléphonie mobile. Cette méthode, ne mettant pas en oeuvre de regroupement des trajets parcourus, nécessite un temps de calcul important et des ressources informatiques (mémoire et processeur) conséquentes pour le traitement d'un grand ensemble de trajets parcourus.

Le document : « Loïc Bonnetain, Angelo Furno, Nour-Eddin El Faouzi, Marco Fiore, Razvan Stanica, Zbigniew Smoreda, Cezary Ziemlicki, TRANSIT: Fine-grained human mobility trajectory inference at scale with mobile network signaling data, Transportation Research Part C: Emerging Technologies, 2021 » décrit une méthode basée sur une stratégie DBSCAN de clustering, qui permet d'affiner des trajectoires d'un même utilisateur à partir de données NSD, grâce à la répétabilité des trajectoires. Le but est d'avoir des trajectoires proches des données GPS. A la fin de l'article, les auteurs superposent des trajectoires et se rendent compte que les réseaux de transport en commun et routier ressortent par cette mise en oeuvre. Ils se servent de ces opérations pour observer les aires d'attraction de certaines zones. Cette méthode ne prend pas en compte l'aspect temporel, ce qui ne permet pas de différencier les trajets utilisant le même chemin à une vitesse différente (par exemple en raison d'un mode de transport différent, ou en raison d'une route congestionnée).

La demande de brevet US10073908 permet de faire un clustering spatio-temporel de trajectoires à l'aide d'une combinaison d'une analyse fonctionnelle des trajectoires (clustering temporel), puis d'un clustering spatial des fonctions identifiées. Le problème principal de cette méthode réside dans le temps de calcul, les moyens informatiques nécessaires (mémoire et processeur) et dans la paramétrisation des méthodes de Functional Data Analytic (FDA - pouvant être traduit par analyse des données fonctionnelles) pour l'estimation d'une fonction paramétrique pour chaque trajectoire et puis de Principal Component Analysis (PCA - pouvant être traduit par analyse en composante principale) pour parvenir à un sous-ensemble de fonctions paramétriques expliquant la majorité de la variance de chaque groupe de fonctions. Cette approche semble peu adaptée pour traiter un grand ensemble de trajets.

**Résumé de l'invention**

La présente invention a pour but de regrouper des trajets parcourus permettant de dissocier les vitesses de trajets différentes, avec un grand nombre de trajets, avec un temps de calcul et des ressources informatiques limitées, afin notamment de déterminer le mode de transport, une quantité de polluants émis, une vitesse de véhicule et/ou un débit de véhicule. Pour cela, l'invention concerne un procédé de regroupement de trajets, avec une étape d'acquisition des données de positionnement horodatées des trajets, une étape de filtre des trajets aberrants, puis une étape de regroupement (clustering) par une méthode de regroupement agglomératif basé sur une distance spatiotemporelle. La méthode de regroupement agglomératif basé sur une distance spatiotemporelle permet, en une seule étape, de différencier dans les groupements les vitesses et les trajectoires des trajets, ce qui favorise notamment la détermination d'un mode de transport, de la quantité de polluants émis, d'une vitesse ou d'un débit.

L'invention concerne en outre un procédé de détermination d'un mode de transport, un procédé de détermination d'une quantité de polluants émis, et un procédé de détermination d'une vitesse ou d'un débit de véhicule mettant en oeuvre un tel procédé de regroupement de trajets.

L'invention concerne un procédé de regroupement de trajets parcourus par au moins un utilisateur par tout moyen de transport, dans lequel on met en oeuvre les étapes suivantes :

> a. On acquiert des données de positionnement horodatées d'une pluralité de trajets parcourus ;
> b. On élimine les trajets aberrants de ladite pluralité de trajets acquis, par une méthode de filtrage appliquée auxdites données de positionnement horodatées ; et
> c. On regroupe ladite pluralité de trajets acquis et filtrés en au moins deux groupements au moyen d'une méthode de regroupement agglomératif basé sur une distance spatiotemporelle, ladite distance spatiotemporelle étant une somme pondérée d'une distance spatiale entre deux trajets et une distance temporelle entre deux trajets fonction de la différence de durée entre deux trajets, ladite distance spatiale et ladite distance temporelle étant déterminées à partir desdites données de positionnement horodatées, les groupements différenciant les vitesses et les trajectoires.

Ce procédé de regroupement de trajets ainsi défini selon l'invention est utile pour le calcul de variables agrégées comme la vitesse moyenne, le flux, les émissions. Mais il est également utile en termes d'informations spatiales : ce regroupement de trajets peut aussi permettre de connaître/d'identifier l'itinéraire ou le chemin le plus représentatif entre deux zones.

A noter que le regroupement agglomératif permet de regrouper des trajets selon leurs caractéristiques spatio-temporelles, ce qui est particulièrement utile pour pouvoir distinguer/déterminer les modes de transport.

On peut souligner que l'invention ainsi définie permet en effet de distinguer des trajectoires qui sont similaires dans l'espace, mais qui sont réalisés avec des modes de transport différents. En effet, des trajectoires similaires dans l'espace peuvent appartenir à différents modes. Et, à titre d'exemple, des trajectoires similaires dans l'espace et dans le temps n'appartiennent pas forcément, sur des sous-trajectoires ou potions de trajectoire, au même mode de transport (un bus et une voiture en congestion pourraient avancer à la même vitesse), et la présente invention permet de les distinguer.

L'invention concerne plus particulièrement les trajectoires et les modes de transport terrestres, de type transport public (bus ...) ou individuel (voiture, vélo...) ou piétonnier.

Selon un mode de réalisation, le procédé comprend une étape de prétraitement desdites données de positionnement horodatées pour déterminer un vecteur ayant un nombre de points de trajet prédéterminé.

Conformément à une mise en oeuvre, on détermine ladite distance spatiale entre deux trajets i et j au moyen de la formule suivante :
$$d_{spat}\left(X_i, X_j\right) = \frac{1}{N} \sum_{k=1}^{N} d_{haversine}\left(\left(\tilde{x}_{i,k}, \tilde{y}_{i,k}\right), \left(\tilde{x}_{j,k}, \tilde{y}_{j,k}\right)\right)$$
avec $X_i$ le trajet i, $X_j$ le trajet j, $d_{spat}$ la distance spatiale, N le nombre de points de trajet, $d_{haversine}$ une distance géodésique entre deux points, $(\tilde{x}_{i,k}, \tilde{y}_{i,k})$ les coordonnées prétraitées du k-ième point de trajet du trajet i, $(\tilde{x}_{j,k}, \tilde{y}_{j,k})$ les coordonnées prétraitées du k-ième point de trajet du trajet j.

Avantageusement, on détermine ladite distance temporelle entre deux trajets i et j au moyen de la formule suivante :
$$d_t\left(X_i, X_j\right) = \frac{\left(\left(\tilde{t}_{i,N} - \tilde{t}_{i,1}\right) - \left(\tilde{t}_{j,N} - \tilde{t}_{j,1}\right)\right)^2}{2}$$
avec $X_i$ le trajet i, $X_j$ le trajet j, $d_t$ la distance temporelle, N le nombre de points de trajet, $\tilde{t}_{i,N}$ l'instant du dernier point de trajet du trajet i, $\tilde{t}_{i,1}$ l'instant du premier point de trajet du trajet j, $\tilde{t}_{j,N}$ l'instant du dernier point de trajet du trajet j, $\tilde{t}_{j,1}$ l'instant du premier point de trajet du trajet j.

Selon un aspect, on détermine ladite distance spatiotemporelle au moyen de la formule suivante :
$d_{spat,temp} = d_{spat} + \lambda d_t$ avec $d_{spat,temp}$ la distance spatiotemporelle, $d_t$ la distance temporelle, $\lambda$ un scalaire de pondération.

Selon une configuration, on acquiert lesdites données de positionnement horodatées de ladite pluralité de trajets à partir de mesures au moyen d'un dispositif de géolocalisation ou de mesures de connexion à un réseau de téléphonie.

Selon une configuration préférée, on utilise des mesures de connexion à un réseau de téléphones. Il s'avère en effet que l'invention donne les résultats attendus même en se basant sur des données de réseau de téléphonie, qui sont pourtant plus « pauvres » que celles obtenues par géolocalisation, et qui ont, en plus, une fréquence d'échantillonnage non constante.

Selon une option de réalisation, le procédé comporte une étape préalable à l'étape b) de filtrage dans laquelle on sélectionne des trajets ayant la même zone géographique d'origine et la même zone géographique de destination, et on applique les étapes de filtrage et de regroupement aux trajets sélectionnés.

De manière avantageuse, on réitère les étapes de filtrage et regroupement pour plusieurs sélections de trajets avec des zones géographiques d'origine et/ou de destination différentes.

Conformément à un mode de réalisation, on filtre lesdits trajets aberrants au moyen d'une méthode de partitionnement de données de type DBSCAN, lesdits trajets aberrants étant les trajets non regroupés par ladite méthode de de partitionnement de données de type DBSCAN.

L'invention concerne également un procédé de détermination d'un mode de transport d'une pluralité de trajets, dans lequel on met en oeuvre les étapes suivantes :

a. On détermine le groupement de chaque trajet au moyen du procédé selon l'une des caractéristiques précédentes ; et

b. On détermine un mode de transport pour chaque groupement en fonction de la vitesse des trajets de chaque groupement et/ou par interpolation d'un mode de transport connu d'au moins un trajet appartenant audit groupement et/ou en fonction de la trajectoire dudit groupement ; et

c. On attribue à chaque trajet dudit groupement le mode de transport déterminé dudit groupement.

Cette détermination du mode de transport d'une pluralité de trajets permet de calculer de manière précise les émissions de polluants et de $CO_2$, mais aussi pour avoir une meilleure compréhension des flux (nombre de véhicules par heure) par mode de transport, et ainsi pouvoir mettre en place des méthodes pour concevoir/dimensionner/faire évoluer l'infrastructure de transport.

De plus, l'invention concerne un procédé de détermination, pour une pluralité de trajets, d'une vitesse moyenne et/ou d'une vitesse médiane et/ou d'un débit de véhicules, dans lequel on met en oeuvre les étapes suivantes :

a. On détermine le groupement de chaque trajet au moyen du procédé selon l'une des caractéristiques précédentes ; et

b. On détermine ladite vitesse moyenne et/ou médiane et/ou le débit de véhicules de chaque groupement au moyen desdites données de positionnement horodatées des trajets appartenant audit groupement.

En outre, l'invention concerne un procédé de détermination d'une quantité d'au moins un polluant émis par une pluralité de trajets, dans lequel on met en oeuvre les étapes suivantes :

a. On détermine le groupement de chaque trajet au moyen du procédé selon l'une des caractéristiques précédentes ; et

b. Pour chaque groupement, on applique un modèle d'émissions polluantes, qui relie la vitesse et la trajectoire dudit groupement à une quantité d'au moins un polluant émis ; et

c. On détermine la quantité d'au moins un polluant émis par ladite pluralité de trajets au moyen d'une somme pondérée desdites quantités de polluant émis pour chaque groupement.

D'autres caractéristiques et avantages du procédé selon l'invention, apparaîtront à la lecture de la description ci-après d'exemples non limitatifs de réalisations, en se référant aux figures annexées et décrites ci-après.

## Liste des figures

La figure 1 illustre les étapes du procédé de regroupement de trajets selon un premier mode de réalisation de l'invention.

La figure 2 illustre les étapes du procédé de regroupement de trajets selon un deuxième mode de réalisation de l'invention.

La figure 3 illustre les étapes du procédé de regroupement de trajets selon un troisième mode de réalisation de l'invention.

La figure 4 illustre les étapes du procédé de détermination d'un mode de transport selon une mise en oeuvre de l'invention.

La figure 5 illustre les étapes du procédé de détermination d'une quantité de polluants émis selon une mise en oeuvre de l'invention.

La figure 6 illustre les étapes du procédé de détermination d'une vitesse ou d'un débit selon une mise en oeuvre de l'invention.

La figure 7 illustre un dendrogramme pour un exemple de mise en oeuvre de l'étape de regroupement agglomératif.

La figure 8 illustre, pour un exemple, un ensemble de trajets entre une zone d'origine et une zone de destination.

La figure 9 illustre pour l'exemple de la figure 8 les trajets aberrants identifiés par l'étape de filtrage selon un mode de réalisation de l'invention.

La figure 10 illustre pour l'exemple des figures 8 et 9 les trajectoires des groupements formés par le procédé de regroupement selon un mode de réalisation de l'invention.

La figure 11 illustre pour l'exemple des figures 8 à 10 les courbes de la distance en fonction du temps pour les groupements formés par le procédé de regroupement selon un mode de réalisation de l'invention.

## Description des modes de réalisation

La présente invention concerne un procédé de regroupement (clustering) de trajets parcourus. On appelle trajet parcouru, un déplacement réalisé par un utilisateur entre une origine et une destination avec tout moyen de locomotion (véhicule, bicyclette, transports en commun : bus, tramway, train, métro, déplacement à pied, etc.). Le regroupement concerne la formation de groupements (clusters) de trajets ayant des similarités (attributs similaires) parmi la pluralité de trajets, en l'occurrence des similarités en termes de vitesse de déplacement et en termes de trajectoires (chemins empruntés). Selon un mode de réalisation de l'invention, le regroupement peut servir à la détermination du ou des mode(s) de transport (c'est-à-dire du ou des moyen(s) de locomotion). Alternativement ou additionnellement, le regroupement peut servir à la détermination d'une quantité de polluants émis. En variante ou cumulativement, le regroupement peut également servir à la détermination d'une vitesse et/ou d'un débit de véhicule. De plus, le regroupement peut servir pour la détermination des itinéraires et routes préférées des utilisateurs, notamment dans un objectif d'assistance à la navigation (détermination d'un trajet à parcourir pour un utilisateur).

Selon un premier mode de réalisation, le procédé peut mettre en oeuvre les étapes suivantes :

1. Acquisition des données de positionnement horodatées

4. Filtrage des trajets aberrants

5. Regroupement des trajets

Ces étapes seront détaillées dans la suite de la description. Ces étapes 4 et 5 peuvent être mises en oeuvre par des moyens informatiques, notamment un ordinateur ou un serveur, comprenant au moins un processeur et une mémoire informatique.

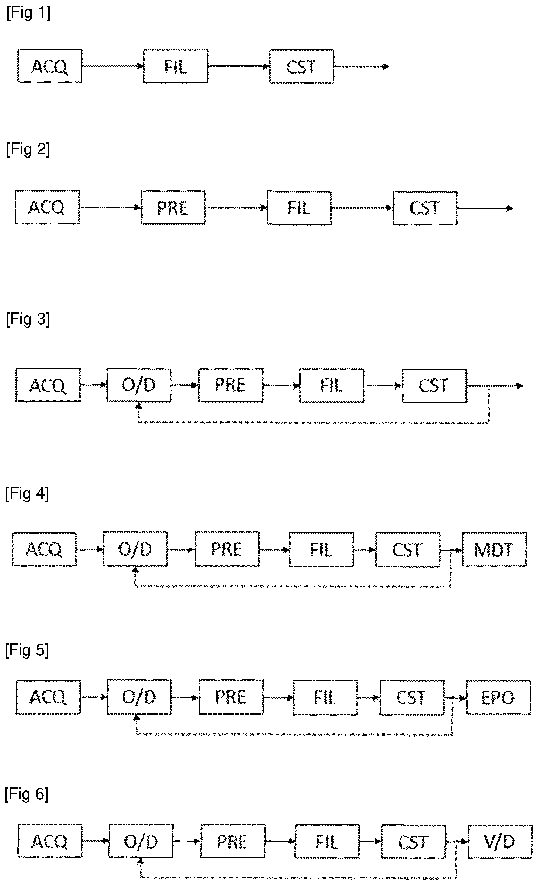

La figure 1 illustre, schématiquement et de manière non limitative, les étapes du procédé de regroupement de trajets selon le premier mode de réalisation. Dans un premier temps, on acquiert ACQ des données de positionnement horodatées de la pluralité de trajets. Ensuite, on retire les trajets aberrants par une méthode de filtrage FIL.

On peut noter qu'avec l'invention, on peut, à l'issue de ce filtrage FIL, et avant, donc, l'étape suivante de regroupement agglomératif (qu'on peut aussi appeler sous le terme anglo-saxon de « clustering ») identifier les itinéraires préférés d'utilisateurs au sein d'un réseau de transport pour aller d'une origine à une destination.

Enfin, on regroupe les trajets par une méthode de regroupement aggloméraitif basé sur une distance spatiotemporelle CST.

Selon un mode de réalisation de l'invention, le procédé peut comporter une étape de prétraitement des données de positionnement horodatées, pour une représentation homogène de tous les trajets, ce qui facilite le calcul de la distance spatiotemporelle. Avantageusement, ce prétraitement peut consister en la formation d'un vecteur ayant un nombre de points de trajet prédéterminé et identique pour tous les trajets.

Ce deuxième mode de réalisation comporte alors les étapes suivantes :

1. Acquisition des données de positionnement horodatées

3. Prétraitement des données de positionnement horodatées

4. Filtrage des trajets aberrants

5. Regroupement des trajets

Ces étapes seront détaillées dans la suite de la description. Ces étapes 3 à 5 peuvent être mises en oeuvre par des moyens informatiques, notamment un ordinateur ou un serveur, comprenant au moins un processeur et une mémoire informatique.

La figure 2 illustre, schématiquement et de manière non limitative, les étapes du procédé de regroupement de trajets selon le deuxième mode de réalisation de l'invention. Les étapes identiques à la figure 1 ne sont pas redétaillées. Le procédé comprend en outre une étape de prétraitement PRE avant l'étape de retrait des trajets aberrants par filtrage FIL.

Conformément à un mode de réalisation de l'invention, le procédé peut comporter en outre une étape de sélection de trajets entre une zone de départ (appelée également zone d'origine) et une zone d'arrivée (appelée également zone de destination). De cette manière, on met en oeuvre les étapes de filtrage et de regroupement pour la sélection de trajets, ce qui diminue le volume de trajets traités, et par conséquent ce qui réduit le temps de calcul et les besoins en ressources informatiques (mémoire et processeur). Pour ce mode de réalisation, on peut réitérer les différentes étapes pour plusieurs sélections de trajets, par exemple pour plusieurs zones de départ et/ou pour plusieurs zones d'arrivée. Ainsi, on construit des groupements pour chaque sélection de trajets.

Ce troisième mode de réalisation comporte alors les étapes suivantes :

1. Acquisition des données de positionnement horodatées

2. Sélection des trajets

4. Filtrage des trajets aberrants

5. Regroupement des trajets

Ces étapes seront détaillées dans la suite de la description. Ces étapes 2, 4 et 5 peuvent être mises en oeuvre par des moyens informatiques, notamment un ordinateur ou un serveur, comprenant au moins un processeur et une mémoire informatique.

La figure 3 illustre, schématiquement et de manière non limitative, les étapes du procédé de regroupement de trajets selon le troisième mode de réalisation de l'invention (incluant le deuxième mode de réalisation de l'invention de la figure 2). Les étapes identiques à la figure 2 ne sont pas redétaillées. Le procédé comprend en outre une étape de sélection de trajets O/D avant l'étape de prétraitement PRE. De plus, la flèche en traits pointillés indique la réitération des étapes 2 à 5 pour plusieurs sélections de trajets.

### 1. Acquisition des données de positionnement horodatées

Lors de cette étape, on acquiert des données de positionnement horodatées d'une pluralité de trajets parcourus. Les données de positionnement horodatées comprennent la localisation dans l'espace de points appartenant à la trajectoire/au trajet ainsi que l'instant associé (horodatage) à cette localisation.

Selon un mode de réalisation, les données de positionnement horodatées peuvent être acquises par mesures au moyen d'un système de géolocalisation, par exemple GPS pour « Global Positioning System » pouvant être traduit par système de positionnement global, ou le système Galileo, ou tout système analogue. Le système de géolocalisation peut notamment être inclus dans un téléphone intelligent ou un objet connecté. Alternativement, les données de positionnement horodatées peuvent être acquises à partir de données de connexion à un réseau de téléphonie. Il peut s'agir de données NSD ou CDR, correspondant notamment à l'emplacement des antennes sur lesquelles un téléphone mobile s'est connecté lors du trajet. Pour ce type de données, les coordonnées géographiques enregistrées ne correspondent pas aux positions réelles d'un utilisateur mais plutôt à celles des antennes auxquelles son téléphone mobile a été connecté lors d'un événement téléphonique (appel, sms, connexion internet). Ces trajets peuvent aussi contenir des artéfacts comme des phénomènes d'écho entre antennes quand le téléphone se connecte à plusieurs antennes en même temps. Ainsi, pour ces différentes réalisations, cette étape de mesure peut être mise en oeuvre au moyen d'un téléphone portable.

### 2. Sélection des trajets

Lors de cette étape facultative, on sélectionne des trajets parmi la pluralité de trajets acquis à l'étape 1. La sélection de trajets concerne le recueil des trajets possédant la même zone de départ (appelée également zone géographique d'origine) et la même zone d'arrivée (appelée également zone géographique de destination). On appelle zone ou zone géographique un territoire donné, par exemple une région, un département, une communauté de communes, une ville, un quartier d'une ville, etc. Une zone géographique comprend par conséquent une pluralité de points (respectivement une pluralité de points d'origine et une pluralité de points de destination de déplacements). A titre d'exemple uniquement, il peut s'agir de déterminer les déplacements entre une zone géographique d'habitation et une zone géographique d'activités professionnelles. La zone géographique d'origine correspond au territoire de départ d'un déplacement, et la zone géographique de destination correspond au territoire d'arrivée d'un déplacement. Pour cette étape, on peut sélectionner tous les trajets dont la première position est dans une zone A (zone d'origine), et la dernière position est dans une zone B (zone de destination).

A la suite de cette sélection de trajets, on peut mettre en oeuvre les étapes de filtrage et de regroupement pour la sélection de trajets, ce qui favorise le nombre de trajets traités, et par conséquent ce qui réduit le temps de calcul et les besoins en ressources informatiques (mémoire et processeur). Lorsqu'on met en oeuvre cette étape facultative, on peut réitérer les différentes étapes pour plusieurs sélections de trajets, par exemple pour plusieurs zones de départ et/ou pour plusieurs zones d'arrivées. Ainsi, on construit des groupements pour chaque sélection de trajets, donc pour chaque couple zone d'origine - zone de destination.

### 3. Prétraitement des données de positionnement horodatées

Lors de cette étape facultative, on réalise un prétraitement des données de positionnement horodatées acquises à l'étape 1, éventuellement uniquement pour la sélection de trajets opérée à l'étape 2. Pour ce prétraitement, on convertit les données de positionnement horodatées de chaque trajet en un vecteur ayant un nombre de points de trajet prédéterminé. En d'autres termes, les données de positionnement horodatées sont converties en un vecteur avec un nombre de points de trajets identiques pour tous les trajets. Ce prétraitement favorise, grâce à cette homogénéité, la mise en oeuvre des étapes suivantes, en limitant le temps de calcul ainsi que les ressources informatiques (mémoire et processeur) nécessaires. En effet, chaque trajet en fonction de sa durée et du mode de mesure peut avoir un nombre de données de positionnement horodatées différents.

Selon un mode de réalisation, le nombre de points de trajet (après prétraitement) peut être compris entre 5 et 100, et préférentiellement entre 10 et 50. Ainsi, on obtient un bon compromis entre précision de la représentation des trajets, temps de calcul et moyens informatiques nécessaires.

Pour un trajet, on peut noter les données de positionnement horodatées acquises à l'étape 1 de la manière suivante : *trace* := $[(x_1, y_1, t_1), ..., (x_K, y_K, t_K)]$ où trace est le vecteur d'un trajet, K le nombre de données de positionnement du trajet, $x_i$ la longitude du point i, $y_i$ la latitude du point i, et $t_i$ l'instant du point i.

Selon un exemple de mise en oeuvre, le prétraitement peut consister en une interpolation des données de positionnement horodatées sur un vecteur de temps de prétraitement de longueur prédéfini (nombre de points de trajet), noté $[\tilde{t}_1, ..., \tilde{t}_N]$ avec N le nombre de points de trajet, où les instants sont répartis de manière linéaire entre $t_1$ et $t_K$, tel que :

$$t_1 = \tilde{t}_1$$

$$t_K = \tilde{t}_N$$

$$\tilde{t}_{i+1} - \tilde{t}_i = \frac{t_k - t_1}{N - 1}.$$

Puis, on peut mettre en oeuvre l'interpolation en formant le nouveau vecteur *trace*$_{interpolée}$ pour chaque trajet de la manière suivante :

$$trace_{interpolée} := [(\tilde{x}_1, \tilde{y}_1, \tilde{t}_1), ..., (\tilde{x}_N, \tilde{y}_N, \tilde{t}_N)]$$

Où $(\tilde{x}_i, \tilde{y}_i)$ est une interpolation de la longitude et de la latitude du vecteur *trace* à l'instant $\tilde{t}_i$. L'interpolation pour ce prétraitement, peut être une interpolation linéaire entre les deux points des données de positionnement horodatées acquises qui entourent l'instant considéré lors du prétraitement. A titre d'exemple, pour un instant $\tilde{t}_a$ du vecteur de temps de prétraitement compris entre les instants $t_i$ et $t_{i+1}$ d'acquisition, on peut écrire respectivement pour la longitude et pour la latitude :

$$\tilde{x}_a = \frac{x_i(\tilde{t}_a - t_i) + x_{i+1}(t_{i+1} - \tilde{t}_a)}{t_{i+1} - t_i}$$

$$\tilde{y}_a = \frac{y_i(\tilde{t}_a - t_i) + y_{i+1}(t_{i+1} - \tilde{t}_a)}{t_{i+1} - t_i}$$

### 4. Filtrage des trajets aberrants

Lors de cette étape, on retire des trajets aberrants parmi les trajets acquis à l'étape 1, éventuellement sélectionnés à l'étape 2, et/ou éventuellement prétraités à l'étape 3, au moyen d'une filtrage des trajets aberrants. On appelle trajet aberrant, par exemple un trajet pour lequel il y a eu des erreurs de mesure des données de positionnement horodatées, ou qui comportent des portions de trajectoires aberrantes : notamment grand détour, boucles, etc. Cette étape permet de faciliter le regroupement spatiotemporel lors de l'étape 5.

Selon un mode de réalisation de l'invention, on peut identifier les trajets aberrants par une méthode de partitionnement de données basée sur une distance entre les trajets, notamment la méthode DBSCAN (de l'anglais « density-based spatial clustering of applications with noise » pouvant être traduit par regroupement spatial basé sur la densité d'applications avec bruit), les trajets aberrants étant ceux qui n'appartiennent pas à un regroupement formé par la méthode de partitionnement des données. D'autres méthodes analogues peuvent être mises en oeuvre pour la filtrage des trajets aberrants .On peut utiliser la distance de Fréchet dans la méthode DBSCAN mentionnée plus haut. On vient ainsi combiner une distance géodésique et une distance temporelle dans un regroupement (« clustering » en anglais) agglomératif.

La méthode DBSCAN permet de regrouper des ensembles de points dans des clusters dans un hyperespace selon les règles suivantes :

- Pour un nouveau point (en l'occurrence un trajet) $X_i$ qui n'est affecté à aucun cluster, on regarde s'il y a des points appartenant à un cluster déjà identifié à moins d'une distance $\varepsilon$ de $X_i$

  ○ Si oui, $X_i$ appartient au cluster le plus proche ainsi que tous les points à une distance inférieure à $\varepsilon$ de $X_i$

  ○ Si non, on regarde combien il y a de points situés à une distance inférieure à $\varepsilon$ de $X_i$

    ■ S'il y en a plus de $n_{min}$, un nouveau cluster est créé et tous les points à une distance inférieure à $\varepsilon$ de $X_i$ sont affectés au nouveau cluster,

    ■ S'il y en a moins de $n_{min}$, $X_i$ est affecté au groupe des points aberrants et peut encore être affecté à un cluster tant que des points situés à une distance inférieure à $\varepsilon$ de $X_i$ ne sont ni affectés à un cluster, ni au groupe des points aberrants.

Les hyperparamètres permettant de régler une méthode de partitionnement de données DBSCAN sont donc $\varepsilon$, qui définit la distance minimale inter-cluster, $n_{min}$ qui définit le nombre minimal d'échantillons présents dans un cluster et la mesure de distance utilisée. De manière simplifiée, si on diminue la valeur de $\varepsilon$, on augmente le nombre de clusters et le nombre de points aberrants, si on diminue la valeur de $n_{min}$, on augmente le nombre de clusters et on diminue le nombre de points aberrants. La méthode DBSCAN est intéressante car elle ne nécessite pas un nombre a priori de clusters à trouver, et elle permet de regrouper tout ce qui se ressemble vraiment en cluster, tant qu'il y a une certaine densité dans le nuage de points, et de séparer ce qui ne ressemble à rien d'autre en points aberrants.

Selon une option de réalisation de l'invention, afin de trouver les valeurs optimales des paramètres de la méthode DBSCAN, on peut opter pour le score de silhouette. Ce dernier permet d'assurer une cohésion des traces au sein de chaque cluster et une séparation des autres clusters. Les valeurs du score de silhouette varient de -1 à 1. Une valeur proche de 1 indique que les traces sont plus proches des traces de leur cluster que des traces formant les clusters voisins. Inversement, une valeur proche de -1 peut révéler que certaines traces ont été attribuées au mauvais cluster. Le score de silhouette est calculé à partir de la distance moyenne intra-cluster (a) et de la distance moyenne entre les clusters les plus proches (b). Elle est exprimée par :

$$Score\ de\ Silhouette \ = \ \frac{b - a}{\max{(a, b)}}$$

Tel que, a est la distance moyenne entre chaque point à l'intérieur d'un cluster et b est la distance entre un point d'un cluster et le cluster le plus proche dont le point ne fait pas partie. En résumé, le score de silhouette fournit une évaluation quantitative de la qualité du clustering et permet d'avoir des clusters ayant une bonne cohésion interne et une séparation vis à vis des autres clusters.

Ensuite, l'évaluation des deux paramètres $\varepsilon$ et $n_{min}$ peut être faite en deux temps. D'abord, on peut trouver la valeur optimale de $\varepsilon$ qui correspond au meilleur score de silhouette en fixant provisoirement une valeur de $n_{min}$ du même ordre de grandeur de ce qu'on s'attend à avoir. La valeur $\varepsilon$ trouvée est utilisée pour calibrer $n_{min}$ afin d'obtenir le plus haut score de silhouette possible.

Conformément à une mise en oeuvre de l'invention, pour regrouper efficacement les traces en fonction de leur similarité spatiale et par conséquent identifier les trajets aberrants, on peut utiliser la distance de Fréchet qui donne une distance faible à deux trajets qui sont très proches l'un de l'autre tout le long du trajet, et une distance forte si les traces s'éloignent l'une de l'autre au cours du trajet, même si elles sont très proches pendant la quasi-totalité du trajet. Cette distance est souvent illustrée comme la distance minimale de la laisse nécessaire pour un maître qui promène son chien où une trace est la trajectoire du maître et l'autre trace est la trajectoire du chien.

A titre d'exemple, pour faire fonctionner l'algorithme DBSCAN, on peut calculer la distance de Fréchet entre chaque paire de trajets de la pluralité de trajets (éventuellement prétraité et éventuellement sélectionné). La distance de Fréchet peut être calculée en utilisant de la programmation dynamique ou peut être approximée par un réseau de neurones (comme décrit par exemple dans la demande de brevet dont le numéro de dépôt est : FR 2307300).

## 5. Regroupement des trajets

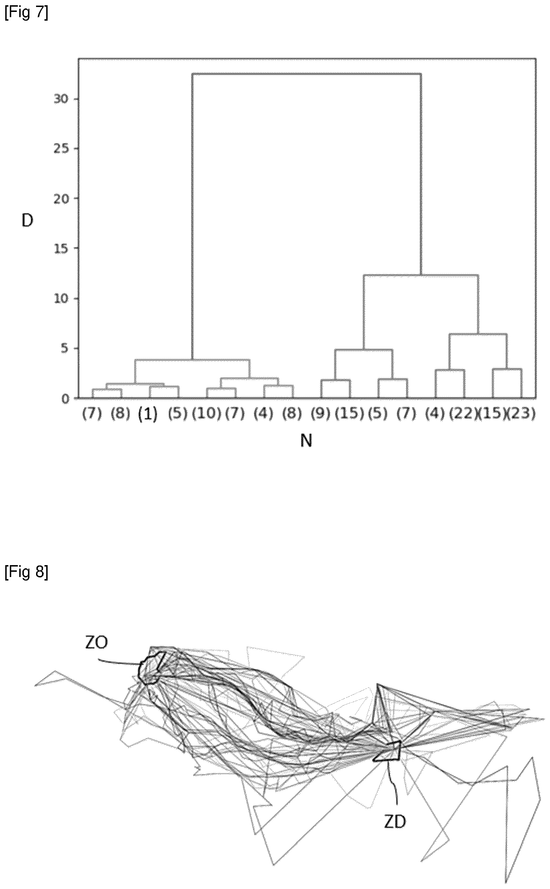

Lors de cette étape, on regroupe les trajets filtrés à l'étape 4 (sans les trajets aberrants) en au moins deux groupements (clusters). En d'autres termes, on forme au moins deux clusters pour classer les trajets. Pour cela, on met en oeuvre une méthode de regroupement agglomératif, qui est une méthode de regroupement hiérarchique qui fusionne des clusters dans l'ordre de leur degré de similitude jusqu'à atteindre un nombre de groupements prédéterminé, noté ici $N_{clust,agg}$. Ce regroupement agglomératif est illustré en figure 7, qui est un dendrogramme d'un ensemble de données. Un dendrogramme est un diagramme qui en abscisse a les indices N des échantillons de la base de données (les chiffres entre parenthèses indiquent le nombre de données dans un noeud, et les chiffres sans parenthèses indiquent la référence de la donnée), et en ordonnée la distance D minimale entre les deux clusters, avec un arbre qui relie hiérarchiquement les clusters. Sur l'arbre, les clusters les plus proches les uns des autres sont fusionnés à leur niveau de distance minimale, en partant de cluster avec un unique échantillon et allant jusqu'à un unique cluster regroupant toutes les données. Le dendrogramme est un outil qui permet d'avoir une appréciation visuelle du nombre de clusters pertinent à considérer, et qui est la base des méthodes de regroupement hiérarchique. Le regroupement agglomératif consiste à utiliser le dendrogramme pour fusionner l'un après l'autre des clusters jusqu'à obtenir le nombre de regroupements requis $N_{clust,agg}$.

Selon l'invention, la méthode de regroupement agglomératif est basée sur une distance spatiotemporelle, qui est une somme pondérée d'une distance spatiale entre deux trajets, et d'une distance dite temporelle qui est fonction de la différence de durée des deux trajets. La distance spatiale et la distance temporelle sont déterminées à partir des données de positionnement horodatées acquises. La prise en compte de données spatiales et temporelles permet de former, en une seule étape, des regroupements différenciant des trajets de vitesses différentes et de trajectoires différentes. Autrement dit, chaque regroupement comprend des trajets empruntant des trajectoires similaires à des vitesses similaires, ce qui permet notamment de discriminer un trajet à vélo, d'un trajet voiture dans un trafic congestionné qui prendraient autant de temps, mais qui ne sont pas réalisés au même rythme (la voiture va aller vite dans certains endroits et très lentement dans d'autres, alors que le vélo sera beaucoup plus régulier).

Selon un mode de réalisation, on peut déterminer la distance spatiotemporelle au moyen de la formule suivante : $d_{spat,temp} = d_{spat} + \lambda d_t$ avec $d_{spat,temp}$ la distance spatiotemporelle, $d_t$ la distance temporelle, $\lambda$ un scalaire de pondération, qui souligne l'importance du temps de trajet.

Les hyperparamètres à régler pour la méthode de regroupement agglomératif sont le nombre de groupements requis $N_{clust,agg}$ et la pondération $\lambda$ qui permet de donner plus ou moins d'importance au temps de trajet dans le clustering. Le choix du paramètre $\lambda$ peut dépendre du type de l'information groupée souhaitée (clustering majoritairement temporel, spatial, ou spatio-temporel).

A titre d'exemple non limitatif, on peut choisir la pondération $\lambda$ entre $10^{-6}$ et $10^{-1}$. Pour chaque valeur de la pondération, on peut alors déterminer un score de silhouette (pour rappel, calculé à partir de la distance moyenne intra-cluster et de la distance moyenne entre les clusters les plus proches) calculé pour $N_{clust,agg}$ = 1 à 40 groupements. La combinaison de $\lambda$ et $N_{clust,agg}$ donnant le meilleur score de silhouette peut alors être choisie.

Pour le mode de réalisation pour lequel les données de positionnement horodatées sont prétraitées, on peut déterminer la distance spatiale au moyen de la formule suivante :

$$d_{spat}\left(X_i, X_j\right) = \frac{1}{N} \sum_{k=1}^{N} d_{haversine}\left(\left(\tilde{x}_{i,k}, \tilde{y}_{i,k}\right), \left(\tilde{x}_{j,k}, \tilde{y}_{j,k}\right)\right)$$

avec $X_i$ le trajet i, $X_j$ le trajet j, $d_{spat}$ la distance spatiale, N le nombre de points de trajet, $d_{haversine}$ une distance géodésique entre deux points, $(\tilde{x}_{ik}, \tilde{y}_{i,k})$ les coordonnées du k-ième point de trajet du trajet i, $(\tilde{x}_{j,k}, \tilde{y}_{j,k})$ les coordonnées du k-ième point de trajet du trajet j.

Pour le mode de réalisation pour lequel les données de positionnement horodatées sont prétraitées, on peut déterminer la distance temporelle au moyen de la formule suivante : $d_t\left(X_i, X_j\right) = \frac{\left(\left(\tilde{t}_{i,N} - \tilde{t}_{i,1}\right) - \left(\tilde{t}_{j,N} - \tilde{t}_{j,1}\right)\right)^2}{2}$ avec $X_i$ le trajet i, $X_j$ le trajet j, $d_t$ la distance temporelle, N le nombre de points de trajet, $\tilde{t}_{i,N}$ l'instant du dernier point de trajet du trajet i, $\tilde{t}_{i,1}$ l'instant du premier point de trajet du trajet j, $\tilde{t}_{j,N}$ l'instant du dernier point de trajet du trajet j, $\tilde{t}_{j,1}$ l'instant du premier point de trajet du trajet j.

Pour le mode de réalisation pour lequel les groupements sont construits pour une sélection de trajets entre une zone d'origine et une zone de destination, on peut répéter les étapes 2 à 5 pour au moins une deuxième sélection de trajets, qui possède une zone d'origine et/ou une zone de destination différente.

De plus, l'invention concerne un procédé de détermination d'un mode de transport d'une pluralité de trajets. Pour ce procédé, on met en oeuvre les étapes suivantes :

- On détermine le groupement de chaque trajet au moyen du procédé de regroupement selon l'une quelconque des variantes ou des combinaisons de variantes décrites ci-dessus ;
- On détermine le mode de transport de chaque groupement en fonction de la vitesse des trajets de chaque groupement et/ou par interpolation d'un mode de transport connu d'au moins un trajet appartenant au groupement (i.e. si on connait le mode de transport d'au moins un trajet appartenant au groupement, alors on applique ce mode de transport à l'ensemble des trajets du groupement) et/ou en fonction de la trajectoire du groupement ; et
- On attribue à chaque trajet du groupement le mode de transport du groupement.

Ce procédé présente l'avantage de déterminer le mode de transport d'un grand nombre de trajets de manière simple, avec un temps de calcul réduit, et avec des besoins en ressources informatiques (mémoire et processeur) limitées. De plus, en raison du regroupement de trajets par trajectoire et vitesse, la détermination du mode de transport est plus précise.

Ces étapes peuvent être mises en oeuvre par des moyens informatiques, notamment un ordinateur ou un serveur, comprenant au moins un processeur et une mémoire informatique.

L'étape de détermination du mode de transport de chaque groupement peut consister à :

- Comparer la vitesse des trajets de chaque groupement (pouvant être obtenue par la distance de la trajectoire du trajet et par la durée moyenne des trajets du groupement, ou par une mesure de la vitesse simultanément aux mesures de données de positionnement horodatées) avec une vitesse représentative des modes de transport : par exemple marche à pied environ 5 km/h, course à pied environ 10 km/h, bicyclette environ 20 km/h, véhicule motorisé en ville entre 30 et 50 km/h, etc., et/ou
- Identifier au moins un trajet du groupement pour lequel le mode de transport est connu, par exemple au moyen d'une étape d'acquisition du mode de transport, et/ou
- Identifier la typologie des chemins emprunté par la trajectoire du groupement, par exemple : s'il s'agit d'une autoroute, le mode de transport est un véhicule motorisé, s'il s'agit d'un chemin, le mode de transport est un mode de transport de mobilité douce.

La figure 4 illustre, schématiquement et de manière non limitative, les étapes du procédé de détermination d'un mode de transport selon un mode de réalisation, incluant les étapes du mode de réalisation de la figure 3. Les étapes décrites pour la figure 3 ne sont pas redétaillées. Le procédé comprend en outre une étape de détermination du mode de transport MDT.

Cette figure comprend les étapes facultatives de sélection des trajets et de prétraitement, toutefois, le procédé de détermination du mode de transport peut être mis en oeuvre sans ces étapes.

L'invention concerne également un procédé de détermination d'une vitesse moyenne et/ou d'une vitesse médiane et/ou un débit de véhicules d'une pluralité de trajets. Pour ce procédé, on met en oeuvre les étapes suivantes :

- On détermine le groupement de chaque trajet au moyen du procédé selon l'une quelconque des variantes ou des combinaisons de variantes décrites ci-dessus ;
- On détermine une vitesse moyenne et/ou une vitesse médiane et/ou un débit de véhicules de chaque groupement au moyen des données de positionnement horodatées des trajets appartenant au groupement.

Ce procédé présente l'avantage de déterminer d'une vitesse moyenne et/ou médiane et/ou un débit de véhicules d'un grand nombre de trajets de manière simple, avec un temps de calcul réduit, et avec des besoins en ressources informatiques (mémoire et processeur) limitées. De plus, en raison du regroupement de trajets par trajectoire et vitesse, la détermination d'une vitesse ou d'un débit est plus précise.

Ces étapes peuvent être mises en oeuvre par des moyens informatiques, notamment un ordinateur ou un serveur, comprenant au moins un processeur et une mémoire informatique.

Selon une option de réalisation, la vitesse des trajets de chaque groupement peut être obtenue par la distance de la trajectoire du trajet, et par la durée moyenne des trajets du groupement.

Alternativement, une médiane ou une moyenne des vitesses des trajets du groupement peut être mise en oeuvre.

En variante ou en outre, on peut déterminer le débit en fonction du nombre de trajets par groupement et en fonction des moments des données de positionnement horodatées (on peut par exemple identifier les moments de la journée favorable aux congestions ou à la circulation fluide).

La figure 6 illustre, schématiquement et de manière non limitative, les étapes du procédé de détermination d'une vitesse ou d'un débit selon un mode de réalisation, incluant les étapes du mode de réalisation de la figure 3. Les étapes décrites pour la figure 3 ne sont pas redétaillées. Le procédé comprend en outre une étape de détermination d'une vitesse ou d'un débit V/D.

Cette figure comprend les étapes facultatives de sélection des trajets et de prétraitement, toutefois, le procédé de détermination d'une vitesse ou d'un débit peut être mis en oeuvre sans ces étapes.

En outre, l'invention concerne un procédé de détermination d'une quantité de polluants émis par une pluralité de trajets. Pour ce procédé, on met en oeuvre les étapes suivantes :

- On détermine le groupement de chaque trajet au moyen du procédé selon l'une quelconque des variantes ou des combinaisons de variantes décrites ci-dessus ;
- Pour chaque groupement, on applique un modèle d'émissions polluantes, qui relie la vitesse et la trajectoire du groupement à une quantité d'au moins un polluant émis, ainsi on obtient une quantité d'émissions polluantes par groupement ; et

- On détermine la quantité d'au moins un polluant émis par ladite pluralité de trajets au moyen d'une somme pondérée desdites quantités de polluant émis pour chaque groupement.

Ce procédé présente l'avantage de déterminer une quantité de polluants émis d'un grand nombre de trajets de manière simple, avec un temps de calcul réduit, et avec des besoins en ressources informatiques (mémoire et processeur) limitées. De plus, en raison du regroupement de trajets par trajectoire et vitesse, la détermination d'une quantité de polluants émis est plus précise.

Ces étapes peuvent être mises en oeuvre par des moyens informatiques, notamment un ordinateur ou un serveur, comprenant au moins un processeur et une mémoire informatique.

Le modèle des émissions de polluantes peut notamment s'écrire sous la forme :

$Q_{pol,gro} = f(v_{gro}, traj_{gro})$ avec $Q_{pol,gro}$ une quantité des émissions de polluants du groupement considéré, $v_{gro}$ une vitesse des véhicules pour le groupement considéré, $traj_{gro}$ la trajectoire du groupement considéré, f une fonction correspondant au modèle.

La vitesse peut être déterminée comme indiquée ci-dessus, ou selon toute détermination analogue. La fonction f peut être obtenue à partir d'un modèle dynamique de véhicule, ou par apprentissage automatique, ou par tout moyen analogue.

Ensuite, on peut déterminer une quantité de polluants par l'ensemble de trajets au moyen d'une formule du type :

$$Q_{pol,tot} = \sum_{l=0}^{N_{clust,agg}} \omega_l Q_{pol,gro\,l}$$

Avec $Q_{pol,tot}$ la quantité totale de polluants émis, $N_{clust,agg}$ le nombre de regroupements, $\omega_l$ la pondération du groupement I, $Q_{pol,gro}$ la quantité de polluants émis pour un trajet du groupement I.

La pondération du groupement $\omega_l$ est avantageusement proportionnelle au nombre de trajets au sein du groupement.

La figure 5 illustre, schématiquement et de manière non limitative, les étapes du procédé de détermination d'une quantité de polluants émis selon un mode de réalisation, incluant les étapes du mode de réalisation de la figure 3. Les étapes décrites pour la figure 3 ne sont pas redétaillées. Le procédé comprend en outre une étape de détermination d'une quantité de polluants émis EPO.

Cette figure comprend les étapes facultatives de sélection des trajets et de prétraitement, toutefois, le procédé de détermination du mode de transport peut être mis en oeuvre sans ces étapes.

De plus, le procédé selon l'invention peut comporter une étape d'affichage du mode de transport et/ou de la vitesse et/ou du débit de véhicules et/ou de la quantité de polluants émis. Lors de cette étape, on affiche le mode de transport et/ou la vitesse et/ou le débit de véhicules et/ou la quantité de polluants émis déterminé sur une carte routière (sur un graphe routier). Cet affichage peut prendre la forme d'une note ou d'un code couleur ou d'une épaisseur de représentation de la route. Cet affichage peut être réalisé à bord du véhicule : sur le tableau de bord, sur un dispositif portatif autonome, tel qu'un appareil de géolocalisation (de type GPS), un téléphone portable (de type téléphone intelligent). Il est également possible d'afficher le mode de transport et/ou la vitesse et/ou le débit de véhicules et/ou la quantité de polluants émis sur un site internet. De plus, le mode de transport et/ou la vitesse et/ou le débit de véhicules et/ou la quantité de polluants émis peut être partagé avec les pouvoirs publics (par exemple gestionnaire de la voirie) et les entreprises de travaux publics. Ainsi, les pouvoirs publics et les entreprises de travaux publics peuvent déterminer les routes ayant un débit de véhicules élevé, une quantité de polluants émis élevée, une vitesse réduite, peu de déplacements en mobilité douce, et adapter les routes aux utilisateurs (par exemple création de nouvelles voies, modification de la signalisation, etc.).

## Exemple

Les caractéristiques et avantages du procédé selon l'invention apparaîtront plus clairement à la lecture de l'exemple ci-après.

Pour cet exemple, on considère 80 trajets entre une zone d'origine notée ZO et une zone de destination notée ZD. Pour ces 80 trajets, on acquiert des données de positionnement horodatées mesurées par connexion au réseau de communication, dites données CDR.

La figure 8 illustre, schématiquement et de manière non limitative, les trajets considérés entre la zone d'origine ZO et la zone de destination ZD. On observe que certains trajets ont des portions de trajet éloignées de la grande majorité des trajets.

On applique une étape de filtrage, par la méthode DBSCAN basée sur une distance de Fréchet, pour identifier les trajets aberrants. Le meilleur score de silhouette obtenu est 0.53 pour les paramètres $\varepsilon$ = 1.98 et $n_{min}$ = 4. Cette opération a permis de filtrer les 6 traces les plus aberrantes.

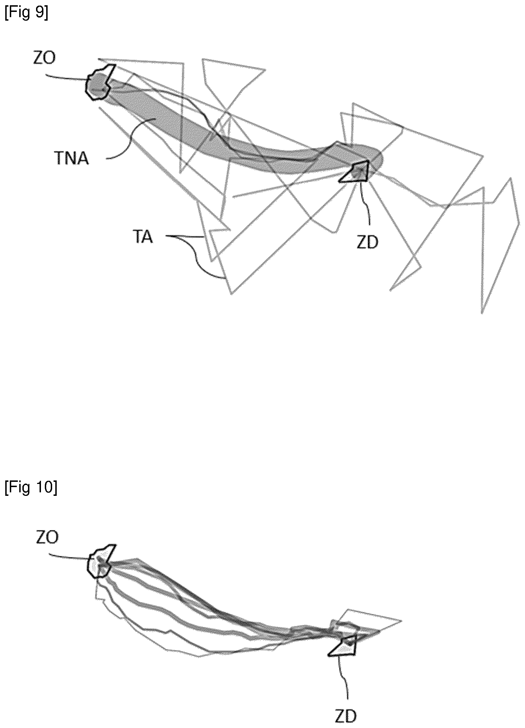

La figure 9 illustre, schématiquement et de manière non limitative, selon la représentation de la figure 8, l'ensemble des 6 traces les plus aberrantes TA. On représente schématiquement les traces non aberrantes TNA avec une seule trajectoire.

On remarque que le filtrage permet bien d'identifier les traces les plus aberrantes ayant des portions de trajet éloignées de la grande majorité des trajets.

On applique ensuite l'étape de regroupement des 74 trajets valides (non aberrants) par une méthode de regroupement agglomératif basé sur une distance spatiotemporelle (telle qu'exemplifiée à l'étape 5). Le meilleur score de silhouette obtenu est 0.77 pour $\lambda$ = 10$^{-3}$ et $N_{clust,agg}$ = 7. On forme ainsi 7 groupements.

La figure 10 illustre, schématiquement et de manière non limitative, selon la représentation de la figure 8, les trajectoires des 7 groupements. On peut observer que certains se chevauchent.

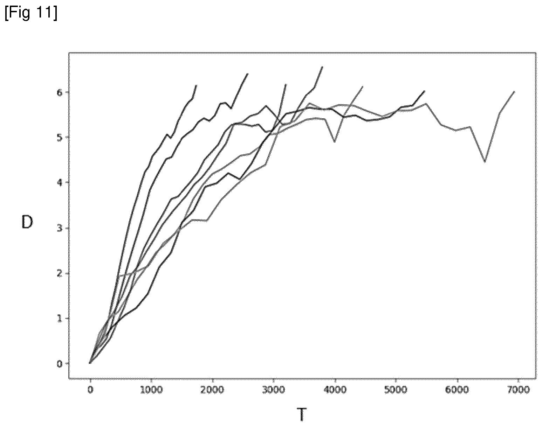

La figure 11 illustre pour ces 7 groupements, la distance parcourue D en km en fonction du temps T en s. On peut observer que les 7 groupements ont des courbes différentes (donc des vitesses différentes).

Par conséquent, le procédé selon l'invention permet de bien différencier les trajets en fonction de leur trajectoire mais aussi de leur vitesse.

## Revendications

1. Procédé de regroupement de trajets parcourus par au moins un utilisateur par tout moyen de transport, **caractérisé en ce qu'**on met en oeuvre les étapes suivantes :

   a. On acquiert (ACQ) des données de positionnement horodatées d'une pluralité de trajets parcourus ;
   b. On élimine les trajets aberrants de ladite pluralité de trajets acquis, par une méthode de filtrage (FIL) appliquée auxdites données de positionnement horodatées ; et
   c. On regroupe (CST) ladite pluralité de trajets acquis et filtrés en au moins deux groupements au moyen d'une méthode de regroupement agglomératif basé sur une distance spatiotemporelle, ladite distance spatiotemporelle étant une somme pondérée d'une distance spatiale entre deux trajets et une distance temporelle entre deux trajets fonction de la différence de durée entre deux trajets, ladite distance spatiale et ladite distance temporelle étant déterminées à partir desdites données de positionnement horodatées, les groupements différenciant les vitesses et les trajectoires.

2. Procédé selon la revendication 1, dans lequel le procédé comprend une étape de prétraitement (PRE) desdites données de positionnement horodatées pour déterminer un vecteur ayant un nombre de points de trajet prédéterminé.

3. Procédé selon la revendication 2, dans lequel on détermine ladite distance spatiale entre deux trajets i et j au moyen de la formule suivante : $d_{spat}(X_i, X_j) = \frac{1}{N} \sum_{k=1}^{N} d_{haversine}\left( (\tilde{x}_{i,k}, \tilde{y}_{i,k}), (\tilde{x}_{j,k}, \tilde{y}_{j,k}) \right)$ avec $X_i$ le trajet i, $X_j$ le trajet j, $d_{spat}$ la distance spatiale, N le nombre de points de trajet, $d_{haversine}$ une distance géodésique entre deux points, $(\tilde{x}_{i,k}, \tilde{y}_{i,k})$ les coordonnées prétraitées du k-ième point de trajet du trajet i, $(\tilde{x}_{j,k}, \tilde{y}_{j,k})$ les coordonnées prétraitées du k-ième point de trajet du trajet j.

4. Procédé selon l'une des revendications 2 ou 3, dans lequel on détermine ladite distance temporelle entre deux trajets i et j au moyen de la formule suivante : $d_t(X_i, X_j) = \frac{\left( (\tilde{t}_{i,N} - \tilde{t}_{i,1}) - (\tilde{t}_{j,N} - \tilde{t}_{j,1}) \right)^2}{2}$ avec $X_i$ le trajet i, $X_j$ le trajet $d_t$ la distance temporelle, N le nombre de points de trajet, $\tilde{t}_{i,N}$ l'instant du dernier point de trajet du trajet i, $\tilde{t}_{i,1}$ l'instant du premier point de trajet du trajet j, $\tilde{t}_{j,N}$ l'instant du dernier point de trajet du trajet j, $\tilde{t}_{j,1}$ l'instant du premier point de trajet du trajet j.

5. Procédé selon l'une des revendications précédentes, dans lequel on détermine ladite distance spatiotemporelle au moyen de la formule suivante : $d_{spat,temp} = d_{spat} + \lambda d_t$ avec $d_{spat,temp}$ la distance spatiotemporelle, $d_t$ la distance temporelle, $\lambda$ un scalaire de pondération.

6. Procédé selon l'une des revendications précédentes, dans lequel on acquiert (ACQ) lesdites données de positionnement horodatées de ladite pluralité de trajets à partir de mesures au moyen d'un dispositif de géolocalisation ou de mesures de connexion à un réseau de téléphonie.

7. Procédé selon l'une des revendications précédentes, dans lequel ledit procédé comporte une étape préalable à l'étape de filtrage (FIL) dans laquelle on sélectionne des trajets ayant la même zone géographique d'origine (ZO) et la même zone géographique de destination (ZD), et on applique les étapes de filtrage (FIL) et de regroupement (CST) aux trajets sélectionnés.

8. Procédé selon la revendication 7, dans lequel on réitère les étapes de filtrage (FIL) et regroupement (CST) pour plusieurs sélections de trajets avec des zones géographiques d'origine (ZO) et/ou de destination (ZD) différentes.

9. Procédé selon l'une des revendications précédentes, dans lequel on filtre (FIL) lesdits trajets aberrants au moyen d'une méthode de partitionnement de données de type DBSCAN, lesdits trajets aberrants étant les trajets non regroupés par ladite méthode de de partitionnement de données de type DBSCAN.

10. Procédé selon l'une des revendications précédentes, **caractérisé en ce qu'**il est mis en oeuvre par des moyens informatiques, notamment un ordinateur ou un serveur comprenant de préférence au moins un processeur et une mémoire informatique.

11. Procédé de détermination d'un mode de transport (MDT) d'une pluralité de trajets, **caractérisé en ce qu'**on met en oeuvre les étapes suivantes :

   a. On détermine le groupement de chaque trajet au moyen du procédé selon l'une des revendications précédentes ; et
   b. On détermine un mode de transport pour chaque groupement en fonction de la vitesse des trajets de chaque groupement et/ou par interpolation d'un mode de transport connu d'au moins un trajet appartenant audit groupement et/ou en fonction de la trajectoire dudit groupement ; et
   c. On attribue (MDT) à chaque trajet dudit groupement le mode de transport déterminé dudit groupement.

12. Procédé de détermination, pour une pluralité de trajets, d'une vitesse moyenne et/ou d'une vitesse médiane et/ou d'un débit de véhicules (V/D), **caractérisé en ce qu'**on met en oeuvre les étapes suivantes :

   a. On détermine le groupement de chaque trajet au moyen du procédé selon l'une des revendications 1 à 10 ; et
   b. On détermine ladite vitesse moyenne et/ou médiane et/ou le débit de véhicules (V/D) de chaque groupement au moyen desdites données de positionnement horodatées des trajets appartenant audit groupement.

13. Procédé de détermination d'une quantité d'au moins un polluant émis par une pluralité de trajets (EPO), **caractérisé en ce qu'**on met en oeuvre les étapes suivantes :

   a. On détermine le groupement de chaque trajet au moyen du procédé selon l'une des revendications 1 à 10 ; et
   b. Pour chaque groupement, on applique un modèle d'émissions polluantes, qui relie la vitesse et la trajectoire dudit groupement à une quantité d'au moins un polluant émis ; et
   c. On détermine la quantité d'au moins un polluant (EPO) émis par ladite pluralité de trajets au moyen d'une somme pondérée desdites quantités de polluant émis pour chaque groupement.

[Fig 1]

```
┌─────┐      ┌─────┐      ┌─────┐
│ ACQ │ ───▶ │ FIL │ ───▶ │ CST │ ───▶
└─────┘      └─────┘      └─────┘
```

[Fig 2]

```
┌─────┐    ┌─────┐    ┌─────┐    ┌─────┐
│ ACQ │ ─▶ │ PRE │ ─▶ │ FIL │ ─▶ │ CST │ ─▶
└─────┘    └─────┘    └─────┘    └─────┘
```

[Fig 3]

```
┌─────┐   ┌─────┐   ┌─────┐   ┌─────┐   ┌─────┐
│ ACQ │─▶ │ O/D │─▶ │ PRE │─▶ │ FIL │─▶ │ CST │─▶
└─────┘   └─────┘   └─────┘   └─────┘   └─────┘
            ▲                              ┆
            └┈┈┈┈┈┈┈┈┈┈┈┈┈┈┈┈┈┈┈┈┈┈┈┈┈┈┈┈┈┘
```

[Fig 4]

```
┌─────┐   ┌─────┐   ┌─────┐   ┌─────┐   ┌─────┐   ┌─────┐
│ ACQ │─▶ │ O/D │─▶ │ PRE │─▶ │ FIL │─▶ │ CST │─▶ │ MDT │
└─────┘   └─────┘   └─────┘   └─────┘   └─────┘   └─────┘
            ▲                              ┆
            └┈┈┈┈┈┈┈┈┈┈┈┈┈┈┈┈┈┈┈┈┈┈┈┈┈┈┈┈┈┘
```

[Fig 5]

```
┌─────┐   ┌─────┐   ┌─────┐   ┌─────┐   ┌─────┐   ┌─────┐
│ ACQ │─▶ │ O/D │─▶ │ PRE │─▶ │ FIL │─▶ │ CST │─▶ │ EPO │
└─────┘   └─────┘   └─────┘   └─────┘   └─────┘   └─────┘
            ▲                              ┆
            └┈┈┈┈┈┈┈┈┈┈┈┈┈┈┈┈┈┈┈┈┈┈┈┈┈┈┈┈┈┘
```

[Fig 6]

```
┌─────┐   ┌─────┐   ┌─────┐   ┌─────┐   ┌─────┐   ┌─────┐
│ ACQ │─▶ │ O/D │─▶ │ PRE │─▶ │ FIL │─▶ │ CST │─▶ │ V/D │
└─────┘   └─────┘   └─────┘   └─────┘   └─────┘   └─────┘
            ▲                              ┆
            └┈┈┈┈┈┈┈┈┈┈┈┈┈┈┈┈┈┈┈┈┈┈┈┈┈┈┈┈┈┘
```

[Fig 7]

[Fig 8]

[Fig 9]

[Fig 10]

[Fig 11]

Europäisches
Patentamt

European
Patent Office

Office européen
des brevets

**RAPPORT DE RECHERCHE EUROPEENNE**

Numéro de la demande

EP 24 19 5532

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | CN 111 582 380 A (THE 92493 TROOPS OF PLA TEST AND TRAINING GENERAL RES INSTITUTE) 25 août 2020 (2020-08-25) * alinéas [0006] - [0007], [0009], [0011] - [0017] * ----- | 1-13 | INV. H04W4/02 H04W4/029 G06F16/28 G06F17/18 G06Q50/40 |
| X | TANG JI ET AL: "Trajectory clustering method based on spatial-temporal properties for mobile social networks", JOURNAL OF INTELLIGENT INFORMATION SYSTEMS: ARTIFICIALINTELLIGENCE AND DATABASE TECHNOLOGIES, vol. 56, no. 1, 14 juillet 2020 (2020-07-14), pages 73-95, XP037333235, ISSN: 0925-9902, DOI: 10.1007/S10844-020-00607-8 * alinéas [0001], [03.2], [3.2.1], [3.2.2], [3.2.3], [04.1] * ----- | 1-13 | G06T11/20  ADD. G06Q10/06 |
| A | X: "Hierarchical clustering - Wikipedia", , 4 septembre 2023 (2023-09-04), XP093141453, Extrait de l'Internet: URL:- [extrait le 2024-03-14] * pages 1-10 * ----- | 1-13 | **DOMAINES TECHNIQUES RECHERCHES (IPC)** H04W G01C G06F G06Q G06T |
| A | FR 3 132 570 A1 (IFP ENERGIES NOW [FR]) 11 août 2023 (2023-08-11) * le document en entier * ----- | 1-13 | |

Le présent rapport a été établi pour toutes les revendications

| Lieu de la recherche | Date d'achèvement de la recherche | Examinateur |
|---|---|---|
| Munich | 4 octobre 2024 | Jeampierre, Gérald |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 24 19 5532

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-10-2024

| Document brevet cité au rapport de recherche | Date de publication | Membre(s) de la famille de brevet(s) | Date de publication |
|---|---|---|---|
| CN 111582380 A | 25-08-2020 | AUCUN | |
| FR 3132570 A1 | 11-08-2023 | EP 4239289 A1 | 06-09-2023 |
| | | FR 3132570 A1 | 11-08-2023 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3112398
- US 20220011123 A
- FR 3130488
- US 10073908 B
- FR 2307300

**Littérature non-brevet citée dans la description**

- **LOÏC BONNETAIN** ; **ANGELO FURNO** ; **NOUR-EDDIN EL FAOUZI** ; **MARCO FIORE** ; **RAZVAN STANICA** ; **ZBIGNIEW SMOREDA** ; **CEZARY ZIEMLICKI**. TRANSIT: Fine-grained human mobility trajectory inference at scale with mobile network signaling data. *Transportation Research Part C: Emerging Technologies*, 2021